# FASCICULE DE BREVET EUROPEEN

(11) **EP 0 522 426 B1**
(45) Date de publication et mention de la délivrance du brevet: **11.10.1995**
(21) Numéro de dépôt: 92111116.7
(22) Date de dépôt: 01.07.1992
(51) Int. Cl.: B65D 90/62, B65D 41/06, B65D 90/22

(54) **Dispositif de fermeture d'un orifice muni d'une sécurité notamment pour l'obturation d'un orifice d'un réservoir contenant des produits chimiques, pétroliers ou analogues**
Verschluss einer mit einer Sicherung versehenen Öffnung, insbesondere zum Schliessen einer Öffnung eines Behälters für Chemie-, Öl- oder dergleichen Produkte
Closure device provided with a safety for an opening, especially for closing a vessel containing chemical, petroleum or similar products

(30) Priorité: 12.07.1991 FR 9108933
(43) Date de publication de la demande: 13.01.1993
(73) Titulaire: MACHAO A.G., CH-6300 Zug (CH)
(72) Inventeur: Piquerez, Claude, CH-1814 La Tour-de-Peilz (CH)
(74) Mandataire: Caron, Gérard

(56) Documents cités:
- EP-A- 0 413 896

## Description

La présente invention concerne un dispositif de fermeture d'un orifice, et notamment un dispositif de fermeture d'un orifice d'un réservoir contenant des produits chimiques, pétroliers ou analogues, ledit dispositif étant muni d'un couvercle et de moyens de verrouillage pour empêcher un enlèvement intempestif de ce couvercle.

On utilise dans le domaine de l'industrie chimique en général, et plus particulièrement dans le transport de produits chimiques sensibles, de nombreux réservoirs ou containers dont le contenu doit être isolé du milieu extérieur pour des raisons évidentes de sécurité, tant pour éviter une pollution de l'environnement que pour éviter une contamination du contenu lui même.

Généralement, si on exclut les éventuels défauts d'étanchéité du réservoir, l'orifice de remplissage, de vidange ou de contrôle sont les seuls moyens par lesquels le contenu du réservoir peut venir en contact avec l'extérieur. Afin d'en isoler le contenu, on obture classiquement l'orifice de ce type de réservoir au moyen de dispositifs de fermeture comprenant un couvercle susceptible d'être fixé par rotation, par exemple par vissage ou analogue, sur un col délimitant l'orifice.

La société Oscar Gossler KG GmbH, Borsigstrasse 4-6, D-2057 Reinbek propose dans le commerce des dispositifs de fermeture standard qui comprennent un couvercle ayant d'un fond plat sensiblement circulaire à partir duquel s'étend perpendiculairement une paroi continue. Cette paroi est munie, sur une face intérieure, d'un système de fixation à baïonnette qui est destiné à coopérer avec des moyens complémentaires prévus sur le col de l'orifice à obturer. Cette paroi est, de plus, pourvue sur une face extérieure, d'ailettes de serrage.

Un inconvénient de ces dispositifs de fermeture consiste en ce qu'ils peuvent être ouverts de façon accidentelle lorsqu'ils sont utilisés dans des conditions extrêmes ou particulièrement difficiles.

En particulier, lorsque ces dispositifs de fermeture sont mis en oeuvre sur des ponts de bateaux-citernes il arrive que, par gros temps, des objets flottants en pleine mer arrivent à la surface du pont et viennent heurter les ailettes de serrage des couvercles et entraînent l'ouverture accidentelle des orifices. On comprendra qu'une telle ouverture expose la cargaison aux risques de contamination et/ou l'environnement aux risques de pollution susmentionnés.

Une solution connue pour pallier cet inconvénient consiste à utiliser des moyens de verrouillage de sécurité comprenant une goupille de sécurité en liaison avec chaque couvercle. Cette solution, bien que satisfaisante du point de vue de l'efficacité, présente toutefois l'inconvénient de nécessiter l'utilisation d'outils aussi bien à l'ouverture qu'à la fermeture.

On connaît également du document FR-A-2 436 684 un dispositif de fermeture d'un orifice comprenant un couvercle et des moyens de verrouillage de ce dernier sur l'orifice. Toutefois, ces moyens de verrouillage sont constitués par un système de clé associée à une serrure ce qui rend son utilisation peu intéressante dans de nombreuses applications, notamment dans celles où de nombreuses personnes sont censées utiliser le dispositif de fermeture.

L'invention a donc pour but principal de remédier aux inconvénients de l'art antérieur susmentionné en fournissant un dispositif de fermeture d'un orifice muni d'un verrouillage de sécurité présentant une structure simple, qui peut aisément s'adapter sur tout type de couvercle standard et qui ne nécessite l'utilisation d'aucun outil tant à l'ouverture qu'à la fermeture.

A cet effet, l'invention a pour objet un dispositif de fermeture d'un orifice délimité par un col tel que défini par la revendication 1 du brevet.

Grâce à ces caractéristiques, on obtient un dispositif de fermeture muni de moyens de verrouillage de sécurité fiables qui peuvent être mis en oeuvre de façon aisée sans outillage spécifique tel qu'une clé.

Selon une caractéristique avantageuse de l'invention, les moyens de blocage de l'élément mobile sont susceptibles d'être bloqués par rotation autour dudit axe dans un second sens, opposé au premier.

Ainsi, toute tentative de retrait du couvercle, accidentelle ou intentionnelle avant que les moyens de verrouillage ne soient déverrouillés ne fait que renforcer le blocage du couvercle sur le col et le couvercle ne peut être retiré que par une combinaison d'opérations successives de sorte qu'une fermeture sûre de l'orifice est assurée.

D'autres caractéristiques et avantages de l'invention apparaîtront à la lecture de la description qui suit de modes de réalisation de l'invention donnés à titre d'exemple illustratif et non limitatif en liaison avec les dessins annexés parmi lesquels :
- la figure 1 est une coupe axiale d'un premier mode de réalisation d'un dispositif de fermeture selon l'invention, ce dernier étant représenté juste avant son montage sur un col délimitant l'orifice d'un réservoir à obturer; et
- la figure 2 est une coupe axiale d'un second mode de réalisation d'un dispositif de fermeture selon l'invention.

La description détaillée du dispositif de fermeture qui va suivre va être faite dans le cadre de l'application à la fermeture d'un orifice de remplissage et/ou de vidange d'un réservoir de bateau-citerne destiné plus particulièrement à contenir des produits chimiques sensibles, pétroliers ou analogues.

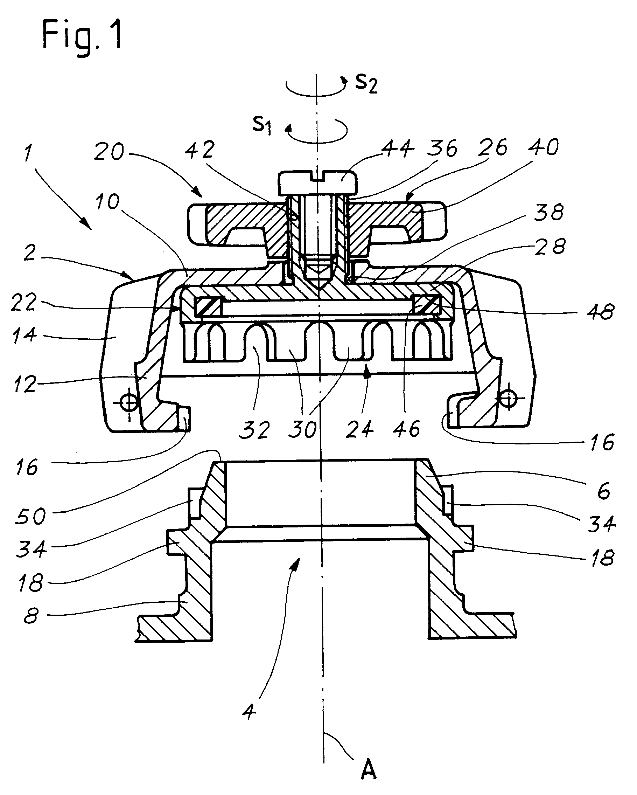

En se référant tout d'abord à la figure 1, on voit la coupe axiale d'un premier mode de réalisation d'un dispositif de fermeture comprenant des moyens de verrouillage de sécurité selon l'invention ce dispositif étant désigné par la référence générale 1. Le dispositif de fermeture 1 est représenté juste avant son installation sur un orifice 4 d'un réservoir (non représenté) qu'il est destiné à obturer.

Le dispositif de fermeture 1 comprend un couvercle 2 destiné à obturer l'orifice 4 délimité par un col 6 de forme sensiblement cylindrique et d'axe longitudinal A. Le col 6 est formé, dans l'exemple décrit, par le prolongement d'une paroi 8 du réservoir.

Il va de soi que selon une variante le col 6 peut être rapporté sur la paroi 8 et/ou avoir tout autre forme de révolution.

Le couvercle 2 a sensiblement la configuration d'une cloche et comprend un fond 10 plat prolongé latéralement par une paroi 12 continue et tronconique. De façon connue en soi, la face extérieure de la paroi 12 comprend des ailettes de serrage 14 et sa face intérieure est munie de deux rampes de fixation 16 qui sont diamétralement opposées et qui s'étendent vers l'intérieur du couvercle 2.

Ces deux rampes 16 forment, avec deux autres rampes complémentaires 18 ménagées de façon similaire sur le col 6, un dispositif de fixation à baïonnette classique. Le couvercle 2 peut ainsi être fixé sur le col 6 en deux opérations successives, à savoir, par une translation selon l'axe A, dit axe d'obturation, et par une rotation autour de ce même axe, dans un sens représenté au dessin par la flèche S1.

Le dispositif de fermeture 1 comprend en outre des moyens de verrouillage 20 pour empêcher un enlèvement intempestif du couvercle 2.

Selon l'invention, ces moyens de verrouillage 20 comprennent un élément 22 mobile en rotation autour de l'axe d'obturation A et par rapport au couvercle 2. Cet élément 22 comprend, d'une part, des moyens de liaison 24 avec le col 6, et d'autre part, des moyens de blocage 26 de l'élément 22 par rapport au couvercle 2.

Plus précisément, l'élément 22 comprend un plateau rond ou disque 28 qui s'étend sensiblement au voisinage du fond 10 du couvercle 2. Ce plateau 28 comprend, sur une première face dirigée vers l'extérieur du couvercle, les moyens de liaison 24 et, sur seconde face opposée à la première, les moyens de blocage 26.

Les moyens de liaison 24 comprennent des dents 30 qui s'étendent axialement à partir du bord périphérique du plateau 28. Ces dents délimitent entre elles des espaces 32 destinés à recevoir des doigts 34 de forme complémentaire ménagés sur le col 6. Dans l'exemple décrit, les doigts 34 sont au nombre de quatre et sont répartis uniformément sur la paroi extérieure du col 6. De plus, le plateau 28 présente un diamètre sensiblement supérieur au diamètre extérieur du col 6 de sorte qu'il coiffe ce dernier.

Bien entendu, on aurait pu, selon une variante, ménager les doigts 34 sur la paroi intérieure du col 6 et prévoir les dents sur un diamètre du plateau sensiblement inférieur au diamètre du pourtour intérieur du col 6.

Les moyens de blocage 26 comprennent un arbre 36 fileté qui s'étend sensiblement à partir du centre du plateau 28 à travers une ouverture 38 ménagée dans le fond 10 du couvercle 2. Cet arbre 36 est associé à un écrou 40 formant une molette de serrage. Selon une caractéristique particulière de l'invention, l'arbre 36 présente un filet 42 avec un sens de serrage S2 (représenté par une flèche au dessin) opposé au sens de serrage S1 du couvercle 2 sur le col 6.

On remarquera que l'arbre 36 comprend une butée d'extrémité 44 permettant d'éviter que l'écrou ne se désengage complètement de l'arbre 36. Cette butée 44 est formée, ici, par une vis vissée en bout dans l'arbre 36, mais tout autre type d'arrêt peut être envisagé.

Par ailleurs, le dispositif de fermeture comprend une garniture d'étanchéité 46 qui est prévue sur l'élément mobile 22. Cette garniture 46, qui a la forme d'un joint annulaire, est disposée dans une rainure annulaire 48 prévue sur la face du plateau 28 munie des dents 30. La rainure annulaire 48 est ménagée sur le plateau de sorte que le joint vient s'appuyer sur une surface d'étanchéité 50 prévue sur le rebord périphérique du col lorsque le couvercle est mis en place selon l'axe d'obturation A et que le joint est comprimé axialement contre la surface 50 lors du serrage du couvercle sur le col par rotation de ce dernier dans le sens de la flèche S1.

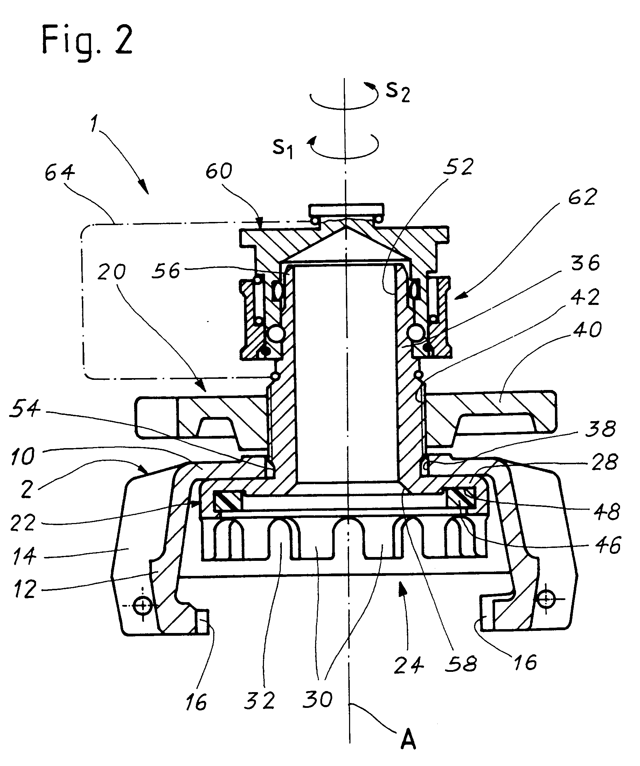

En se référant maintenant à la figure 2, on voit la coupe axiale d'un second mode de réalisation du dispositif de fermeture selon l'invention dans lequel les éléments identiques à ceux décrits précédemment en liaison avec la figure 1 sont désignés par les mêmes références numériques.

Selon ce mode de réalisation, l'arbre 36 est muni d'un alésage 52 s'étendant selon l'axe A et débouchant à ses deux extrémités 54, 56. L'extrémité 54 située du côté du plateau 22 coïncide avec une ouverture centrale 58 ménagée dans le plateau 22. L'autre extrémité 56 est associée à un second couvercle 60 qui est fixé sur l'arbre par un système 62 à encliquetage élastique et à bague de sécurité classique, ce second couvercle 60 étant relié à l'arbre 36 par une chaînette de sécurité 64 représentée par un trait mixte au dessin. On notera que cet alésage permet de réaliser de façon avantageuse des prélèvements d'échantillons dans le réservoir sans avoir à ouvrir le couvercle 2.

Il est évident pour l'homme de métier que la présence de cet alésage 52 dans l'arbre 36 ne change rien au principe de fonctionnement de l'invention décrit ci-après.

Le fonctionnement des deux modes de réalisation du dispositif de fermeture selon l'invention décrits plus haut est le suivant :
Avant la mise en place du couvercle, l'écrou molette 40 est desserré et l'élément 22 est libre en rotation par rapport au couvercle. Le couvercle 2 ainsi préparé est présenté au dessus de l'orifice 4 de sorte que les rampes 16 soient à la verticale des espaces existants entre les rampes 18 du col 6. Le couvercle est alors translaté selon l'axe d'obturation A jusqu'à ce que la garniture 46 vienne en contact avec la surface d'étanchéité 50. Dans le même temps, le plateau 22 est ajusté en rotation de sorte que les quatre doigts 34 du col s'engagent dans quatre des espaces 32 correspondants. Le couvercle est ensuite actionné en rotation autour de l'axe d'obturation A dans le sens de la flèche S1 pour, d'une part, fixer par serrage le couvercle 2 sur le col 6 et, d'autre part, comprimer axialement la garniture 46 contre la surface 50 pour assurer l'étanchéité du réservoir vis à vis de l'extérieur. Le couvercle 2 serré sur le col 6 est alors verrouillé sur ce dernier en serrant l'écrou 40 contre la face extérieure du fond du couvercle 2. De cette façon, si le couvercle vient à être sollicité avant son déverrouillage, par exemple accidentellement par une action sur les ailettes de serrage qui tend à faire tourner le couvercle dans le sens de la flèche S2, cette action entraîne, compte tenu des sens de serrage inversés respectivement du couvercle 2 et de l'écrou 40, un serrage du couvercle contre l'écrou blocage du couvercle sur le col.

## Revendications

1. Dispositif de fermeture (1) d'un orifice (4) délimité par un col (6), notamment pour l'obturation d'un orifice d'un réservoir contenant des produits chimiques, pétroliers ou analogues, comprenant un couvercle (2) susceptible d'être fixé sur le col (6) par rotation autour d'un axe (A) dans un premier sens (S1), le couvercle (2) comprenant un fond (10) et des moyens de verrouillage (20) pour empêcher un enlèvement intempestif du couvercle, les moyens de verrouillage (20) comprenant un élément (22) mobile en rotation par rapport au couvercle (2), l'élément mobile (22) présentant, d'une part, des moyens de liaison (24) de cet élément (22) avec le col (6), ces moyens de liaison (24) étant destinés à coopérer avec des moyens (34) complémentaires ménagés sur le col (6) et, d'autre part, des moyens de blocage (26) de l'élément mobile (22) par rapport au couvercle (2), caractérisé en ce que les moyens de blocage (26) de l'élément mobile (22) sont bloqués par rotation autour dudit axe (A) dans un second sens (S2), opposé au premier (S1) en engendrant un serrage axial.

2. Dispositif de fermeture selon la revendication 1, caractérisé en ce que les moyens de liaison (24) comprennent un plateau (28) à partir du bord duquel s'étendent axialement des dents (30), les espaces (32) délimités par ces dernières étant destinés à recevoir des doigts (34) de forme complémentaire ménagés sur le col (6).

3. Dispositif de fermeture selon la revendication 2, caractérisé en ce que les dents (30) sont uniformément réparties sur un cercle du plateau (28) dont le diamètre est sensiblement supérieur au diamètre du pourtour extérieur du col (6).

4. Dispositif de fermeture selon l'une quelconque des revendications 1 à 3, caractérisé en ce que les moyens de blocage (26) comprennent un arbre fileté (36) relié aux moyens de liaison (24), cet arbre (36) s'étendant à travers une ouverture (38) ménagée dans le fond (10) du couvercle (2) et coopérant avec un écrou (40).

5. Dispositif de fermeture selon la revendication 2, caractérisé en ce que les moyens de blocage (26) comprennent un arbre (36) muni d'un alésage axial débouchant (52), et en ce que le plateau (28) comprend en outre une ouverture centrale (58) ménagée en correspondance avec une première extrémité (54) de l'alésage (52).

6. Dispositif de fermeture selon la revendication 5, caractérisé en ce qu'une seconde extrémité (56) de l'alésage (52) est associée à un second couvercle (60).

7. Dispositif de fermeture selon l'une quelconque des revendications précédentes, caractérisé en ce qu'il comprend une garniture d'étanchéité (46) prévue sur l'élément mobile (22).

8. Dispositif de fermeture selon la revendication 3 en combinaison avec la revendication 7, caractérisé en ce que la garniture (46) est disposée dans une rainure annulaire (48) ménagée dans la face du plateau (28) située du côté des dents (30), la garniture (46) étant destinée à venir en contact avec une surface d'étanchéité (50) ménagée sur le rebord périphérique du col (6).

9. Dispositif de fermeture selon l'une quelconque des revendications précédentes, caractérisé en ce que le couvercle (2) est fixé sur le col au moyen d'un dispositif de fixation à baïonnette (16, 18).

## Claims

1. Closure device (1) for an orifice (4) bounded by a neck (6), especially for sealing an orifice of a container for chemical, petroleum or analogous products, having a cover (2) adapted to be fixed to the neck (6) by rotation about an axis (A) in a first direction (S1), the cover (2) having a base (10) and locking means (20) to prevent inadvertent removal of the cover, the locking means (20) comprising an element (22) which is rotatable with respect to the cover (2), the rotatable element (22) having, on the one hand, means (24) to fixedly connect in rotation this element (22) to the neck (6), these means (24) being adapted to cooperate with complementary means (34) disposed on the neck (6) and, on the other hand, means (26) for blocking the rotatable element (22) with respect to the cover (2), characterized in that the blocking means (26) of the rotatable element (22) are rotatably blocked about said axis (A) in a second direction (S2), opposite the first one (S1) producing thus an axial gripping.

2. Closure device according to claim 1, characterized in that the connection means (24) comprise a plate (28) from the edge of which there extend axially teeth (30), the spaces (32) delimited by these latter being adapted to receive fingers (34) of complementary shape disposed on the neck (6).

3. Closure device according to claim 2, characterized in that the teeth (30) are uniformly distributed on a circle of the plate (28) the diameter of which is substantially greater than the diameter of the outer circumference of the neck (6).

4. Closure device according to any one of claims 1 to 3, characterized in that the blocking means (26) comprise a threaded shaft (36) connected to the connection means (24), this shaft (36) extending across an opening (38) provided in the base (10) of the cover (2) and cooperating with a nut (40).

5. Closure device according to claim 2, characterized in that the blocking means (26) comprise a shaft (36) provided with an axial discharge boring (52), and in that the plate (28) also comprises a central opening (58) disposed opposite a first extremity (54) of the boring (52).

6. Closure device according to claim 5, characterized in that a second extremity (56) of the boring (52) is associated with a second cover (60).

7. Closure device according to any one of the preceding claims, characterized in that it comprises a sealing member (46) provided on the rotatable element (22).

8. Closure device according to claim 3 combined with claim 7, characterized in that the sealing member (46) is arranged in an annular groove (48) provided in the face of the plate (28) located on the side of the teeth (30), the sealing member (46) being adapted to come into contact with a sealing surface (50) provided on the peripheral edge of the neck (6).

9. Closure device according to any one of the preceding claims, characterized in that the cover (2) is fixed on the neck (6) with the help of locking means of the bayonet-type (16, 18).

## Patentansprüche

1. Schliessvorrichtung (1) für eine von einem Kragen (6) begrenzte Öffnung (4), insbesondere für das Absperren einer Öffnung eines chemische, Erdöl- oder analoge Produkte enthaltenden Reservoirs, umfassend einen an dem Kragen (6) durch Drehung um eine Achse (A) in einem ersten Drehsinn (S1) befestigbaren Deckel (2) mit einem Boden (10) und Verriegelungsmitteln (20) zum Verhindern eines unzeitigen Abnehmens des Deckels, wobei die Verriegelungsmittel (20) ein relativ zum Deckel (2) drehbewegliches Element (22) umfassen, das einerseits Verbindungsmittel (24) zum Verbinden dieses Elements (22) mit dem Kragen (6), welche zum Zusammenwirken mit auf dem Kragen (6) des Elements (22) ausgebildeten komplementären Mitteln (34) bestimmt sind, und andererseits Blockiermittel (26) des beweglichen Elements (22) relativ zum Deckel (2) aufweist, dadurch gekennzeichnet, dass die Blockiermittel (26) des beweglichen Elements (22) durch Drehung um die Achse (A) in einem zweiten (S2), dem ersten (S1) entgegengesetzten Drehsinn, ein axiales Anziehen bewirkend blockierbar sind.

2. Schliessvorrichtung nach Anspruch 1, dadurch gekennzeichnet, dass die Verbindungsmittel (24) eine Scheibe (28) umfassen, von deren Rand sich Zähne (30) axial erstrecken, wobei die von diesen Zähnen (30) begrenzten Zwischenräume (32) zur Aufnahme von auf dem Kragen (6) ausgebildeten Fingern (34) komplementärer Form bestimmt sind.

3. Schliessvorrichtung nach Anspruch 2, dadurch gegenzeichnet, dass die Zähne (30) gleichmässig auf einem Kreis der Scheibe (28), dessen Durchmesser etwas grösser als der Durchmesser des Aussenumfangs des Kragens (6) ist, verteilt sind.

4. Schliessvorrichtung nach einem der Ansprüche 1 bis 3, dadurch gekennzeichnet, dass die Blockiermittel (26) einen mit den Verbindungsmitteln (24) verbundenen Gewindezapfen (36) umfassen, welcher sich durch eine im Boden (10) des Deckels (2) ausgebildete Öffnung (38) erstreckt und mit einer Mutter (40) zusammenwirkt.

5. Schliessvorrichtung nach dem Anspruch 2, dadurch gekennzeichnet, dass die Blockiermittel (26) einen mit einer mundenden Axialbohrung (52) versehenen Zapfen (26) umfassen, und dass die Scheibe (28) ferner eine zentrale, im Anschluss an ein erstes Ende (54) der Bohrung (58) ausgebildete Offnung (58) aufweist.

6. Schliessvorrichtung nach Anspruch 5, dadurch gekennzeichnet, dass ein zweites Ende (56) der Bohrung (52) einem zweiten Deckel (60) zugeordnet ist.

7. Schliessvorrichtung nach einem des vorangehenden Ansprüche, dadurch gekennzeichnet, dass sie eine auf dem beweglichen Element (22) vorgesehene Dichtungsanordnung (46) umfasst.

8. Schliessvorrichtung nach Anspruch 8 und einem der vorangehenden Ansprüche in Kombination mit Anspruch 3, dadurch gekennzeichnet, dass die Dichtungsanordnung (46) in einer in der auf der Seite der Zähne (30) liegenden Fläche der Scheibe (28) ausgebildeten Ringnut (48) angeordnet ist, wobei die Dichtungsanordnung (46) dazu vorgesehen ist, mit einer auf der peripheren Stirnseite des Kragens (6) ausgebildeten Dichtfläche (50) in Kontakt zu treten.

9. Schliessvorrichtung nach einem der vorangehenden Ansprüche, dadurch gekennzeichnet, dass der Deckel (2) auf dem Kragen (6) mittels einer Bajonettverschlussanordnung (16, 18) befestigt ist.
